# EUROPEAN PATENT APPLICATION

(11) **EP 4 788 043 A1**
(43) Date of publication of application: **05.08.2026**
(21) Application number: 24870658.2
(22) Date of filing: 23.09.2024
(51) Int. Cl.: H04W 76/10

(54) **METHOD FOR ESTABLISHING DATA CHANNEL, FIRST USER EQUIPMENT, AND NETWORK SIDE FUNCTION**

(30) Priority: 28.09.2023 CN 202311284753; 21.06.2024 CN 202410812164
(71) Applicant: Vivo Mobile Communication Co., Ltd., Dongguan, Guangdong 523863 (CN)
(72) Inventor: JIN, Hui, Dongguan, Guangdong 523863 (CN)
(74) Representative: Shieldmark
(86) International application number: PCT/CN2024/120457
(87) International publication number: WO 2025/067114

(57) **Abstract**

This application discloses a data channel establishment method, first user equipment, and a network side function, and belongs to the field of communication technologies. The data channel establishment method in embodiments of this application includes: The first user equipment determines that an application data channel DC corresponding to a target application cannot be established with a second user equipment; and the first user equipment sends a first message to a first network function, where the first message is used for requesting to establish a person-to-application P2A application DC corresponding to the target application.

## Description

### CROSS-REFERENCE TO RELATED APPLICATIONS

This application claims priorities to Chinese Patent Application No. 202311284753.5, filed with the China National Intellectual Property Administration on September 28, 2023 and entitled "DATA CHANNEL ESTABLISHMENT METHOD, FIRST USER EQUIPMENT, AND NETWORK SIDE FUNCTION", and to Chinese Patent Application No. 202410812164.8, filed with the China National Intellectual Property Administration on June 21, 2024 and entitled "DATA CHANNEL ESTABLISHMENT METHOD, FIRST USER EQUIPMENT, AND NETWORK SIDE FUNCTION", which are incorporated herein by reference in their entireties.

### TECHNICAL FIELD

This application belongs to the field of communication technologies, and specifically, to a data channel establishment method, first user equipment, and a network side function.

### BACKGROUND

The 3rd generation partnership project (3rd Generation Partnership Project, 3GPP) standard introduces a mechanism of establishing a data channel (Data Channel, DC) during a call. An additional service, such as screen sharing, converting voice into text for users, location sharing, or file transmission, may be performed during the call through the DC, thereby bringing better experience to the users.

However, a difference usually exists between DC capabilities that can be supported by user equipment (User Equipment, UE). This may cause a case in which DC characteristics of two communicating UEs do not match each other. Consequently, it is difficult to normally use a DC application in some DC services, and use experience of the DC services is limited.

### SUMMARY

Embodiments of this application provide a data channel establishment method, first user equipment, and a network side function, to resolve a problem that it is difficult for two communicating UEs to normally use a DC application in some DC services due to mismatching of DC characteristics.

According to a first aspect, a data channel establishment method is provided, and is performed by first user equipment. The method includes:
The first user equipment determines that an application data channel DC corresponding to a target application cannot be established with second user equipment; and
the first user equipment sends a first message to a first network function, where the first message is used for requesting to establish a person-to-application P2A application DC corresponding to the target application.

According to a second aspect, a data channel establishment method is provided, and is performed by a first network function. The method includes:
The first network function receives a first message sent by first user equipment, where the first message is used for requesting to establish an application data channel DC corresponding to a target application; and
the first network function establishes, based on the first message, a P2A application DC corresponding to the target application.

According to a third aspect, a data channel establishment method is provided, and is performed by a first network function. The method includes:
The first network function receives a target message including information about a target application, where the target message is used for requesting to establish an application data channel DC corresponding to the target application to a first user equipment; and
the first network function sends first indication information to a second network function based on the information about the target application and that second user equipment does not support a DC service, or the first network function sends first indication information to a second network function based on the information about the target application and that second user equipment does not support the target application.

The first indication information indicates the second network function to perform a first operation.

According to a fourth aspect, a data channel establishment method is provided, and is performed by a second network function. The method includes:
The second network function obtains first indication information, where the first indication information indicates the second network function to perform a first operation, and the first operation is used for sending related information of data corresponding to a target application to second user equipment;
the second network function receives the data that is sent by first user equipment through a person-to-application P2A application data channel DC and that corresponds to the target application; and
the second network function performs the first operation based on the first indication information and the data corresponding to the target application.

According to a fifth aspect, a data channel establishment apparatus is provided, and is used in first user equipment. The apparatus includes:
a determining module, configured to determine that an application data channel DC corresponding to a target application cannot be established with second user equipment; and
a sending module, configured to send a first message to a first network function, where the first message is used for requesting to establish an application DC corresponding to the target application.

According to a sixth aspect, a data channel establishment apparatus is provided, and is used in a first network function. The apparatus includes:
a first receiving module, configured to receive a first message sent by the first user equipment, where the first message is used for requesting to establish a person-to-application P2A application data channel DC corresponding to a target application; and
an establishment module, configured to establish, based on the first message, the P2A application DC corresponding to the target application.

According to a seventh aspect, a data channel establishment apparatus is provided, and is used in a second network function. The apparatus includes:
an obtaining module, configured to obtain first indication information, where the first indication information indicates the second network function to perform a first operation, and the first operation is used for sending related information of data corresponding to a target application to second user equipment;
a second receiving module, configured to receive the data that is sent by first user equipment through a person-to-application P2A application data channel DC and that corresponds to the target application; and
a first processing module, configured to perform the first operation based on the first indication information and the data corresponding to the target application.

According to an eighth aspect, first user equipment is provided. The first user equipment includes a processor and a memory. The memory stores a program or instructions executable on the processor. When the program or the instructions are executed by the processor, the steps of the method according to the first aspect are implemented.

According to a ninth aspect, first user equipment is provided, including a processor and a communication interface. The processor is configured to: determine that an application data channel DC corresponding to a target application cannot be established with second user equipment. The communication interface is configured to: send a first message to a first network function, where the first message is used for requesting to establish a person-to-application P2A application DC corresponding to the target application.

According to a tenth aspect, a network function is provided. The network function includes a processor and a memory. The memory stores a program or instructions executable on the processor. When the program or the instructions are executed by the processor, the steps of the method according to the second aspect are implemented, or the steps of the method according to the third aspect are implemented.

According to an eleventh aspect, a network function is provided, including a processor and a communication interface. The communication interface is configured to receive a first message sent by the first user equipment, where the first message is used for requesting to establish a person-to-application P2A application data channel DC corresponding to a target application. The processor is configured to establish, based on the first message, the P2A application DC corresponding to the target application, or
the processor is configured to obtain first indication information, where the first indication information indicates the second network function to perform a first operation, and the first operation is used for sending related information of data corresponding to a target application to second user equipment. The communication interface is configured to receive the data that is sent by first user equipment through a person-to-application P2A application data channel DC and that corresponds to the target application; and The processor is configured to perform the first operation based on the first indication information and the data corresponding to the target application.

According to a twelfth aspect, a readable storage medium is provided. The readable storage medium stores a program or instructions. When the program or the instructions are executed by the processor, the steps of the method according to the first aspect are implemented, or the steps of the method according to the second aspect are implemented, or the steps of the method according to the third aspect are implemented.

According to a thirteenth aspect, a wireless communication system is provided, including: first user equipment, a first network function, and a second network function. The first user equipment may be configured to perform steps of the method according to the first aspect. The first network function may be configured to perform steps of the method according to the second aspect. The second network function may be configured to perform steps of the method according to the third aspect.

According to a fourteenth aspect, a chip is provided. The chip includes a processor and a communication interface. The communication interface is coupled to the processor. The processor is configured to execute a program or instructions, to implement the method according to the first aspect, or implement the method according to the second aspect, implement the method according to the third aspect.

According to a fifteenth aspect, a computer program/program product is provided. The computer program/program product is stored in a storage medium. The computer program/program product is executed by at least one processor, to implement the steps of the data channel establishment method according to the first aspect, or implement the steps of the data channel establishment method according to the second aspect, or implement the steps of the data channel establishment method according to the third aspect.

In this embodiment of this application, when determining that the first user equipment cannot establish the application DC corresponding to the target application with the second user equipment, the first user equipment may send the first message to the first network function to request to establish the P2A application DC corresponding to the target application, to implement communication between the first user equipment and an application server side through the P2A application DC, and further implement interaction, about the target application, between the first user equipment and the second user equipment by using an application server, so that even when DC characteristics of the first user equipment and the second user equipment do not match each other, interaction with the target application can be implemented through the P2A application DC, and different types of DC applications may also be used between UE that supports the DC service and UE that does not support the DC service, thereby effectively enhancing use experience of the DC service.

### BRIEF DESCRIPTION OF DRAWINGS

FIG. 1 is a schematic diagram of a wireless communication system applicable to an embodiment of this application;
FIG. 2 is a schematic flowchart 1 of a data channel establishment method according to an embodiment of this application;
FIG. 3a is a schematic flowchart 2 of a data channel establishment method according to an embodiment of this application;
FIG. 3b is a schematic flowchart 3 of a data channel establishment method according to an embodiment of this application;
FIG. 4 is a schematic flowchart 4 of a data channel establishment method according to an embodiment of this application;
FIG. 5 is a signaling interaction diagram 1 of a data channel establishment method according to an embodiment of this application;
FIG. 6 is a signaling interaction diagram 2 of a data channel establishment method according to an embodiment of this application;
FIG. 7 is a signaling interaction diagram 3 of a data channel establishment method according to an embodiment of this application;
FIG. 8 is a signaling interaction diagram 4 of a data channel establishment method according to an embodiment of this application;
FIG. 9 is a schematic diagram 1 of a structure of a data channel establishment apparatus according to an embodiment of this application;
FIG. 10 is a schematic diagram 2 of a structure of a data channel establishment apparatus according to an embodiment of this application;
FIG. 11 is a a schematic diagram 3 of a structure of a data channel establishment apparatus according to an embodiment of this application;
FIG. 12 is a schematic diagram of a structure of a communication device according to an embodiment of this application;
FIG. 13 is a schematic diagram of a hardware structure of first user equipment according to an embodiment of this application; and
FIG. 14 is a schematic diagram of a structure of a network function according to an embodiment of this application.

### DESCRIPTION OF EMBODIMENTS

The following describes the technical solutions in embodiments of this application with reference to the accompanying drawings in embodiments of this application. It is clear that the described embodiments are a part rather than all of embodiments of this application. All other embodiments obtained by a person of ordinary skill in the art based on embodiments of this application fall within the protection scope of this application.

In this application, the terms "first" and "second" are used to distinguish similar objects, but are not used to describe a specific sequence or order. It should be understood that the terms used in this way may be transposed where appropriate, so that embodiments of this application may be implemented in a sequence other than those illustrated or described herein. In addition, objects defined by "first" and "second" are generally of the same class and do not limit a quantity of objects. For example, one or more first objects may be arranged. In addition, "or" in this application indicates at least one of connected objects. For example, "A or B" covers three solutions, that is, Solution 1: including A and excluding B; Solution 2: including B and excluding A; and Solution 3: including both A and B. The character "/" in this specification generally indicates an "or" relationship between the associated objects.

In this application, the term "indication" may be a direct indication (or an explicit indication) or an indirect indication (or an implied indication). The direct indication may be understood as that a sending party clearly informs a receiving party of content such as specific information, a to-be-performed operation, or a request result in a sent indication. The indirect indication may be understood as that the receiving party determines corresponding information based on the indication sent by the sending party, or makes a judgment and determines the to-be-performed operation, the request result, or the like based on the judgment result.

It should be noted that, the technology described in embodiments of this application may be applied to a long term evolution (Long Term Evolution, LTE)/LTE-advanced (LTE-Advanced, LTE-A) system, and may be further applied to another wireless communication system like a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, or another system. The terms "system" and "network" in embodiments of this application are usually interchangeably used, and the described technology may be applied to both the system and the wireless technology mentioned above, or may be applied to another system and wireless technology. A new radio (New Radio, NR) system is described below as an example, and the term NR is used in most of the following descriptions. Nevertheless, the technologies may also be applied to a system other than the NR system, for example, a 6th Generation (6th Generation, 6G) communication system.

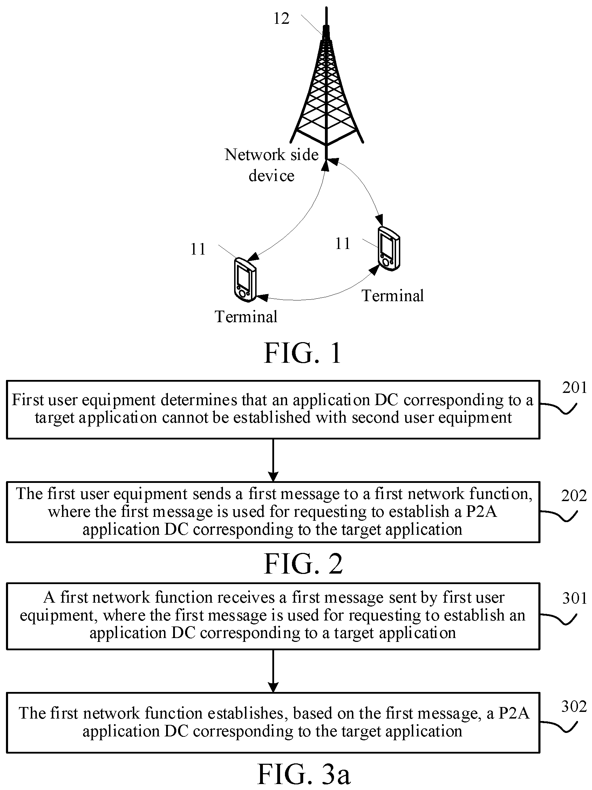

FIG. 1 is a schematic diagram of a wireless communication system applicable to an embodiment of this application. The wireless communication system includes terminals 11 and a network side device 12. The terminal 11 may be a terminal side device like a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-Mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), a vehicle-mounted device (Vehicle User Equipment, VUE), a ship-borne equipment, a pedestrian user equipment (Pedestrian User Equipment, PUE), a smart home appliance (a home device with a wireless communication capability, for example, a refrigerator, a television, a washing machine, or furniture), a game console, a personal computer (Personal Computer, PC), a teller machine, or a self-service machine. The wearable device includes a smart watch, a smart band, a smart headset, smart glasses, smart jewelry (a smart bracelet, a smart chain bracelet, a smart ring, a smart necklace, a smart ankle bangle, a smart ankle chain, and the like), a smart wristband, smart clothing, and the like. The vehicle-mounted device may also be referred to as a vehicle-mounted terminal, a vehicle-mounted controller, a vehicle-mounted module, a vehicle-mounted component, a vehicle-mounted chip, a vehicle-mounted unit, or the like. Besides the above terminal devices, the terminal 11 may further be a chip in a terminal, for example, a modem (Modem) chip or a system on chip (System on Chip, SoC). It should be noted that a specific type of the terminal 11 is not limited in embodiments of this application. The network side device 12 may include an access network device or a core network device. The access network device may also be referred to as a radio access network (Radio Access Network, RAN), a wireless access network function, or a wireless access network unit. The access network device may include a base station, a wireless local area network (Wireless Local Area Network, WLAN), an access point (Access Point, AP), a wireless fidelity (Wireless-Fidelity, Wi-Fi) node, or the like. The base station may be referred to as a node B (Node B, NB), an evolved node B (evolved Node B, eNB), the next generation Node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission receiving point (Transmission Receiving Point, TRP) or some other suitable terms in the field as long as the same technical effect is achieved, and the base station is not limited to a specific technical word. It should be noted that in embodiments of this application, introduction is made only taking the base station in the NR system as an example, and the specific type of the base station is not limited.

The core network device may include, but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, the core network device in the NR system is used only as an example for description in embodiments of this application, but a specific type of the core network device is not limited.

To facilitate a clearer understanding of the technical solutions provided in embodiments of this application, first, some related background knowledge is described as follows.

For services performed through a DC, different services correspond to different DC applications (DC application). The DC application may be dynamically downloaded to UE during a call, and does not need to be installed in advance on the UE, which facilitates use by a user. For ease of description, the DC application is briefly referred to as an APP below.

If two communication parties enable an APP, a corresponding application DC (application DC) needs to be established for the APP. Different APPs have different QoS (Quality of Service, quality of service) requirements. For example, an augmented reality (Augmented Reality, AR) application requires a low delay and a high throughput, and a screen sharing application requires good real-time performance. Usually, each APP needs to establish a corresponding application DC.

In a related technology, each UE can support different DC capacities. For example, each UE completely supports no DC characteristic, or supports only some DC characteristics.

When DC characteristics of two communication parties do not match each other, processing may be performed by a network side device (or referred to as a network function), for example, a media function (media function, MF). For example, user equipment 1 (UE-1) supports a screen sharing characteristic, and user equipment 2 (UE-2) does not support a DC or does not support a screen sharing characteristic. In this case, UE-1 may encapsulate screen information into a video data packet, for example, a real-time transport protocol (Real-time Transport Protocol, RTP) packet, and send the video data packet to the MF through the DC. The MF obtains, from the DC, the video data packet encapsulated by UE-1, and sends the video data packet to UE-2 through a video call channel of the MF and UE-2, so that UE-2 can view a screen of UE-1.

However, there are many types of APPs. For some cases in which UE-1 cannot directly convert the video data packet into a video, for example, location sharing, real-time speech translation (Real-time speech translation), and file transmission, the APPs cannot be used between UE-1 and UE-2. This limits use experience of a DC service.

Real-time speech translation includes converting speech of a party in a call into text and presenting the text to a communication peer end. A standard description is as follows: provide instantaneous voice translation for the calling parties in a call and further perform speech-to-text.

A data channel establishment method, first user equipment, and a network side function according to an embodiment of this application will be described in detail below in conjunction with the accompanying drawings and through some embodiments and application scenarios thereof.

FIG. 2 is a schematic flowchart 1 of a data channel establishment method according to an embodiment of this application. As shown in FIG. 2, the method includes Step 201 and Step 202.

Step 201: First user equipment determines that an application DC corresponding to a target application cannot be established with second user equipment.

It should be noted that the first user equipment determines that the application DC corresponding to the target application cannot be established with the second user equipment may be understood as that the first user equipment determines that a person-to-person (Person-to-Person, P2P) application DC corresponding to the target application cannot be established with the second user equipment.

The first user equipment and the second user equipment include, for example, the terminal 11 shown in FIG. 1.

Step 202: The first user equipment sends a first message to a first network function, where the first message is used for requesting to establish a P2A application DC corresponding to the target application.

It should be noted that in the foregoing person-to-application (Person-to-Application, P2A) application DC that is established through requesting, P2A indicates a type of the application DC, and indicates that the application DC is an application DC established between the first user equipment and an application server. The first user equipment may communicate with the application server through the P2A application DC. The foregoing application server is, for example, a DC application server (Application Server, AS).

The first user equipment may be considered as UE supporting the target application. Therefore, the first user equipment also supports establishing the application DC corresponding to the target application. In a process in which the first user equipment establishes an IP multimedia subsystem (IP Multimedia Subsystem, IMS) session with the second user equipment, the first user equipment may determine whether the second user equipment supports a DC, determine whether the second user equipment supports the target application, or determine whether the second user equipment can establish the application DC corresponding to the target application.

In a related technology, if the first user equipment supports establishing the application DC corresponding to the target application and that the second user equipment does not support the DC or does not support establishing the application DC corresponding to the target application, the application DC corresponding to the target application cannot be established between the first user equipment and the second user equipment due to different DC characteristics. Therefore, it is difficult to implement interaction, about the target application, between the first user equipment and the second user equipment, which limits use experience of a DC service.

For the foregoing problem, in this embodiment of this application, in a process of establishing the IMS session between the first user equipment and the second user equipment, if the first user equipment determines that the first user equipment cannot establish the application DC corresponding to the target application with the second user equipment, the first user equipment may send the first message to the first network function, to request to establish the P2A application DC corresponding to the target application, further use the P2A application DC to communicate with the application server, for example, communicate with the DC AS corresponding to the target application, and further implement interaction, about the target application, between the first user equipment and the second user equipment through the P2A application DC, thereby effectively improving use experience of a user for the DC service, for example, improving call experience.

Optionally, the first network function may include a data channel signaling function (data channel signaling function, DCSF).

Specifically, the first user equipment may send the first message to the DCSF by using an IMS AS, to request to establish the P2A application DC.

It should be noted that, that the first user equipment sends the first message to the first network function may be understood as that after sending the first message, the first user equipment enables the first network function to receive the first message or a second message. A case in which the first network receives the second message may be understood as that the first message triggers another core network device (for example, the IMS AS) to generate the second message abased on the first message, and send the second message to the DCSF.

Optionally, the first network function may also include an IMS AS.

Optionally, the first message may include at least one of the following:
(1) information about the target application.

Specifically, the first message may include the information about the target application, for example, an identifier (ID) of the target application, so that the first network function establishes, based on the information about the target application, the P2A application DC between the first user equipment and the DC AS corresponding to the target application.

(2) Third indication information, indicating to establish the P2A application DC, where the third indication information is determined by the first user equipment based on that the second user equipment does not support the DC service or does not support the target application.

Specifically, the first message may further include the third indication information indicating to establish the P2A application DC. The third indication information is indication information determined by the first user equipment based on that the second user equipment does not support the DC service or does not support the target application. The first network function may establish the P2A application DC corresponding to the target application by using the indication information.

In the data channel establishment method according to this embodiment of this application, when determining that the first user equipment cannot establish the application DC corresponding to the target application with the second user equipment, the first user equipment may send the first message to the first network function to request to establish the P2A application DC corresponding to the target application, to implement communication between the first user equipment and the application server side through the P2A application DC, and further implement interaction, about the target application, between the first user equipment and the second user equipment by using the application server, so that even when DC characteristics of the first user equipment and the second user equipment do not match each other, interaction with the target application can be implemented through the P2A application DC, and different types of DC applications may also be used between UE that supports the DC service and UE that does not support the DC service, thereby effectively enhancing use experience of the DC service.

Optionally, the first user equipment may send, through the P2A application DC, data corresponding to the target application to a second network function, where the data corresponding to the target application is used by the second network function to perform a first operation, and the first operation is used for sending related information of the data corresponding to the target application to the second user equipment.

Optionally, the second network function may include at least one of the following: an MF, a media resource function (Media Resource Function, MRF), or a DC AS.

Specifically, the established P2A application DC may be specifically divided into two parts of data channels. One part is a data channel between the first user equipment and the MF or the MRF, and the other part is a data channel between the MF or the MRF and the DC AS. It should be noted that, the first user equipment may implement communication with the DC AS by using the MF or the MRF.

Optionally, before sending, through the P2A application DC, the data corresponding to the target application to the second network function, the first user equipment may first receive indication information from the first network function, to indicate that the P2A application DC is established, and then send the data to the second network function through the P2A application DC.

After the P2A application DC is successfully established, the first user equipment may send, through the P2A application DC, the data corresponding to the target application to the second network function, so that the second network function performs the first operation based on the data, that is, sends the related information of the data corresponding to the target application to the second user equipment.

Optionally, the related information of the data corresponding to the target application includes at least one of the following:
(1) a link generated based on the data corresponding to the target application;
(2) a video file generated based on the data corresponding to the target application; and
(3) a multimedia file generated based on the data corresponding to the target application.

The following describes the related information of the data corresponding to the target application by using perspectives such as file transmission, real-time speech translation, and location sharing of the target application as an example.

Optionally, if the target application is used for file transmission, content of the first operation may include at least one of the following:
a. saving a file;
b. generating a download link corresponding to the file; and
c. sending the download link to the second user equipment.

Specifically, if the target application is a file transmission APP, after the first user equipment sends, through the P2A application DC, the data corresponding to the target application to the second network function, the second network function may perform the first operation based on the received data. Specifically, the data received by the second network function may be data in a file form. The second network function may first save the file, then generate the download link corresponding to the file, and further send the generated download link to the second user equipment. The second user equipment may download, by clicking the download link, the file uploaded by the first user equipment, to implement a file transmission function.

It should be noted that, only some of the steps of the content of the first operation may be performed. For example, the step of saving the file may not be performed, or other steps may be added based on an actual situation, to implement the file transmission function.

Optionally, when the target application is used for location sharing, the content of the first operation may include at least one of the following:
a. mapping location information of the first user equipment to a map;
b. generating a link including the map and the location information of the first user equipment; and
c. sending the generated link to the second user equipment.

Specifically, if the target application is a location sharing APP, after the first user equipment sends, through the P2A application DC, the data corresponding to the target application to the second network function, the second network function may perform the first operation based on the received data. Specifically, the data received by the second network function may be the location information reported by the first user equipment, for example, may include longitude and latitude information. The second network function may first map the location information of the first user equipment to the map, for example, map to a web page version map, and then generate a link including a mapping relationship between the map and the location information, to display a location of the first user equipment on the map. Then, the generated link is sent to the second user equipment, and the second user equipment may obtain the location of the first user equipment by clicking the link, to implement a location sharing function.

It should be noted that, only some of the steps of the content of the first operation may be performed, or other steps may be added based on an actual situation, to implement the location sharing function.

Optionally, the foregoing generated link may be directly sent by the second network function to the second user equipment, for example, the MF sends the link to the second user equipment by using an SMS message. Alternatively, the second network function may send the link to the second user equipment by using the IMS AS. For example, the MF first sends the link to the IMS AS by using the DCSF, and then the IMS AS sends the generated link to the second user equipment by using an SMS message or by using IMS signaling. Alternatively, the generated link may be sent by the first user equipment to the second user equipment, for example, the MF sends the link to the first user equipment through the P2A application DC, and the first user equipment sends the generated link to the second user equipment by using an SMS message or by using IMS signaling.

Optionally, when the target application is used for real-time speech translation, the content of the first operation may include at least one of the following:
a. establishing a video transmission channel between the second network function and the second user equipment;
b. generating corresponding text based on call voice or a call video;
c. generating a video file by using the generated text and the call voice or the call video; and
d. sending the generated video file to the second user equipment.

Specifically, if the target application is a real-time speech translation APP, after the first user equipment sends, through the P2A application DC, the data corresponding to the target application to the second network function, the second network function may perform the first operation based on the received data. Specifically, the second network function may first establish a video transmission channel between the second network function and the second user equipment, for example, through an RTP connection. The purpose of establishing the video transmission channel is to subsequently transmit the generated video file. If the video transmission channel is established between the second network function and the second user equipment, this step may be omitted.

For a related operation of implementing a real-time speech translation function, the second network function first receives a to-be-translated call voice or video sent by the first user equipment, generates text by using the to-be-translated call voice or video, then generates a video file by using the generated text and the call voice or video, for example, combines the text with the voice or video to generate the video file, and then sends the generated video file to the second user equipment through the video transmission channel, to implement the real-time speech translation function.

It should be noted that, only some of the steps of the content of the first operation may be performed, or other steps may be added based on an actual situation, to implement the real-time speech translation function.

Optionally, an implementation of determining, by the first user equipment, that the application data channel DC corresponding to the target application cannot be established with the second user equipment may include:

when determining that the second user equipment does not support the DC service or does not support the target application, the first user equipment determines that the application DC corresponding to the target application cannot be established with the second user equipment.

Specifically, that the first user equipment cannot establish the application DC corresponding to the target application with the second user equipment may be divided into the following two cases: one case is that the second user equipment completely does not support the DC service, and the other case is that the second user equipment supports the DC service but does not support the target application in the DC service. As a result, in both cases, the first user equipment cannot establish the application DC corresponding to the target application with the second user equipment. Therefore, when determining that the second user equipment does not support the DC service or does not support the target application, the first user equipment may determine that the application DC corresponding to the target application cannot be established with the second user equipment.

Optionally, the first message may further indicate the first network function to send first indication information to the second network function, where the first indication information indicates the second network function to perform the first operation.

Specifically, for the first message sent by the first user equipment to the first network function, the first user equipment not only can request the first network function to establish the P2A application DC corresponding to the target application, but also can indicate the first network function to send the first indication information to the second network function, to indicate the second network function to perform the first operation.

For example, the first network function may send, based on the first message, the first indication information to the second network function in a process of establishing the P2A application DC, to indicate the second network function to perform the first operation. The indication herein may be understood as configuration, which does not mean that the second network function performs the first operation after the first network function sends the first indication information to the second network function, and may specifically indicate to perform the first operation after the data that is sent by the first user equipment through the P2A application DC and that corresponds to the target application is received.

Optionally, the first indication information may include at least one of the following:
(1) second indication information, indicating to perform the first operation;
(2) information about the target application; and
(3) content of the first operation.

Specifically, the second network function may pre-store a first operation corresponding to each APP, so that when the second network function receives second indication information, or second indication information and information about the target application, sent by the first network function by using the IMS AS, the second network function may determine how to perform the first operation.

In some embodiments, the first network function may alternatively directly send, to the second network function by using the IMS AS, specific content of the first operation that needs to be performed by the second network function.

Optionally, the first user equipment may send the first indication information to the second network function, where the first indication information indicates the second network function to perform the first operation.

Specifically, in addition to that the first network function may send the first indication information to the second network function, the first user equipment may also send the first indication information to the second network function through the P2A application DC after successfully establishing the P2A application DC, to indicate the second network function to perform the first operation. The indication herein may also be understood as configuration, which does not mean that the second network function performs the first operation after the first user equipment sends the first indication information to the second network function, and the first user equipment further needs to send, through the P2A application DC, the data corresponding to the target application, and the second network function then performs the first operation based on the data.

Optionally, the first user equipment may determine the first indication information based on the information about the target application and that the second user equipment does not support the DC service; or
Optionally, the first user equipment may determine the first indication information based on information about the target application and that the second user equipment does not support the target application.

Specifically, the first user equipment may determine the first indication information based on the information about the target application and that the second user equipment does not support the DC service (or the second user equipment does not support the target application), to ensure that the first indication information corresponds to the target application.

FIG. 3a is a schematic flowchart 2 of the data channel establishment method according to an embodiment of this application. As shown in FIG. 3a, the method includes Step 301 and Step 302.

Step 301: A first network function receives a first message sent by first user equipment, where the first message is used for requesting to establish an application DC corresponding to a target application.

It should be noted that, that the first network function receives the first message sent by the first user equipment may be understood as that: The first message received by the first network function is triggered by the first user equipment, and the first message may be sent by the first user equipment, or the first message is a message generated by another core network device (for example, an IMS AS) based on the message sent by the first user equipment, and the generated message is sent to the first network function.

Step 302: The first network function establishes, based on the first message, a P2A application DC corresponding to the target application.

Specifically, when determining that the first user equipment cannot establish the application DC corresponding to the target application with the second user equipment, the first user equipment may send the first message to the first network function to request to establish the application DC corresponding to the target application, so that the first network function may establish, based on the first message, the P2A application DC corresponding to the target application, to implement communication between the first user equipment and an application server side through the P2A application DC. Further, the first user equipment may implement interaction, about the target application, between the first user equipment and the second user equipment by using the application server.

In the data channel establishment method provided in this embodiment of this application, the first network function first receives the first message sent by the first user equipment, and the message is used to request to establish the application DC corresponding to the target application, so that the first network function may establish the P2A application DC corresponding to the target application based on the first message, and the first user equipment implements communication between the first user equipment and the application server side through the established P2A application DC. In this way, the first user equipment may implement interaction, about the target application, between the first user equipment and the second user equipment by using the application server, so that even when DC characteristics of the first user equipment and the second user equipment do not match each other, interaction with the target application can be implemented through the P2A application DC, and different types of DC applications may also be used between UE that supports the DC service and UE that does not support the DC service, thereby effectively enhancing use experience of the DC service.

Optionally, the first network function may send first indication information to a second network function, where the first indication information indicates the second network function to perform a first operation.

Specifically, the first network function may send the first indication information to the second network function in a process of establishing the P2A application DC, to indicate the second network function to perform the first operation. The indication herein may be understood as configuration, which does not mean that the second network function performs the first operation after the first network function sends the first indication information to the second network function, and may specifically indicate to perform the first operation after the data that is sent by the first user equipment through the P2A application DC and that corresponds to the target application is received.

Optionally, the first network function may determine the first indication information.

The first network function sends the first indication information to the second network function.

Specifically, the first network function may determine the first indication information, and then send the first indication information to the second network function.

Optionally, an implementation of determining the first indication information by the first network function may include any one of the following:
(1) The first network function determines the first indication information based on information about the target application and that second user equipment does not support a DC service; or
(2) The first network function determines the first indication information based on information about the target application and that second user equipment does not support the target application.

Optionally, an implementation of determining the first indication information by the first network function may include:
The first network function determines a processing policy of the application DC in a process of establishing the application DC, where the processing policy includes the first indication information.

Specifically, the first network function may determine the processing policy of the application DC in the process of establishing the application DC. The first indication information may be included in the processing policy, or may exist in parallel with the processing policy.

Optionally, an implementation of sending the first indication information by the first network function to the second network function may include at least one of the following:
(1) The first network function sends a resource reservation indication message of the application DC to a media function MF in the second network function in a process of establishing the application DC, where the resource reservation indication message includes the first indication information; or
(2) The first network function sends, in a process of establishing the application DC, an establishment request message of the application DC to a DC application server AS corresponding to the target application; where the establishment request message includes the first indication information.

Specifically, in a process of establishing the application DC, the first network function needs to send the resource reservation indication message of the application DC to the MF or an MRF in the second network function, or may synchronously send the first indication information to the MF or an MRF. The first indication information may be included in the resource reservation indication message of the application DC, or may exist in parallel with the resource reservation indication message of the application DC.

In addition, in a process of establishing the application DC, the first network function further needs to send the establishment request message of the application DC to the MF or the MRF in the second network function, or may synchronously send the first indication information to the MF or the MRF. The first indication information may be included in the establishment request message of the application DC, or may exist in parallel with the establishment request message of the application DC.

Optionally, the first indication information may include at least one of the following:
(1) second indication information, indicating to perform the first operation;
(2) information about the target application; and
(3) content of the first operation.

Optionally, if the target application is used for file transmission, content of the first operation may include at least one of the following:
a. saving a file;
b. generating a download link corresponding to the file; and
c. sending the download link to the second user equipment.

Optionally, when the target application is used for real-time speech translation, the content of the first operation may include at least one of the following:
a. establishing a video transmission channel between the second network function and the second user equipment;
b. generating corresponding text based on call voice or a call video;
c. generating a video file by using the generated text and the call voice or the call video; and
d. sending the generated video file to the second user equipment.

Optionally, when the target application is used for location sharing, the content of the first operation may include at least one of the following:
a. mapping location information of the first user equipment to a map;
b. generating a link including the map and the location information of the first user equipment; and
c. sending the generated link to the second user equipment.

Optionally, the first message may include at least one of the following:
(1) information about the target application; and
(2) Third indication information, indicating to establish the P2A application DC, where the third indication information is determined by the first user equipment based on that the second user equipment does not support the DC service or does not support the target application.

Optionally, the first message may include the information about the target application and fourth indication information.

When determining that the second user equipment does not support the DC service or does not support the target application, the first network function modifies the fourth indication information into third indication information, and establishes the P2A application DC corresponding to the target application.

The third indication information indicates to establish the P2A application DC, and the fourth indication information indicates to establish a person-to-person P2P application DC. Optionally, when the first message may include the information about the target application and the fourth indication information, the first network device sends a response message corresponding to the first message to the first user equipment, where the response message includes third indication information.

Optionally, the second network function may include at least one of the following: the MF, the MRF, and a DC AS. The first network function includes at least one of the following: a DCSF and an IMS AS.

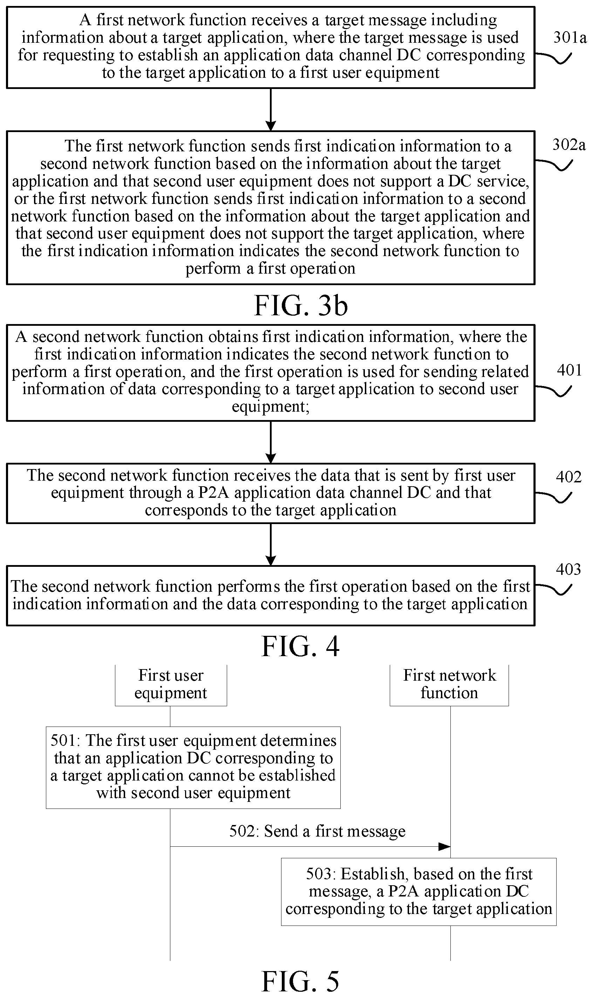

FIG. 3b is a schematic flowchart 3 of a data channel establishment method according to an embodiment of this application. As shown in FIG. 3b, the method includes Step 301a and Step 302a.

Step 301a: A first network function receives a target message including information about a target application, where the target message is used for requesting to establish an application data channel DC corresponding to the target application to a first user equipment; and
Step 302a: The first network function sends first indication information to a second network function based on the information about the target application and that second user equipment does not support a DC service, or the first network function sends first indication information to a second network function based on the information about the target application and that second user equipment does not support the target application, where the first indication information indicates the second network function to perform a first operation.

In the data channel establishment method provided in this embodiment of this application, the first network function first receives the target message, where the message is used to request to establish the DC corresponding to the target application, so that the first network function may send first indication information to the second network function based on the information about the target application and that second user equipment does not support the DC service, or the first network function may send the first indication information to the second network function based on the information about the target application and that second user equipment does not support the target application, and further implement interaction, about the target application, between the first user equipment and the second user equipment by using the application server, so that even when DC characteristics of the first user equipment and the second user equipment do not match each other, interaction with the target application can be implemented through the P2A application DC, and different types of DC applications may also be used between UE that supports the DC service and UE that does not support the DC service, thereby effectively enhancing use experience of the DC service.

Optionally, the first network function includes an IMS AS.

Optionally, that the first network function receives the target message includes: The first network function receives the first message sent by the first user equipment, where the first message includes third indication information, or the first network function receives a third message sent by a DCSF, where the third message includes third indication information. The third indication information indicates to establish a P2A application DC.

Optionally, the DCSF receives the first message sent by the first user equipment, where the first message includes fourth indication information. The DCSF modifies the fourth indication information into the third indication information and sends the third message to the first network function, where the third message includes the third indication information.

Optionally, when the target message includes the third indication information, the first network function sends the first indication information to the second network function based on the information about the target application, that the second user equipment does not support the DC service, and the third information, or the first network function sends the first indication information to the second network function based on the information about the target application, that the second user equipment does not support the target application, and the third information.

Optionally, before the first network function sends the first indication information to the second network function, the method further includes:
The first network function receives a subscription (subscribe) request sent by the second network function, where the subscription request includes event (event) information, and the event information includes at least one of the following:
the information about the target application;
the second user equipment does not support the DC service or the second user equipment does not support the target application; and
establishing the P2A application DC.

It should be noted that the second terminal device may be understood as a communication peer end of the first terminal device, and the first terminal device may be understood as an initiator of the application DC corresponding to the target application. For example, when the first network function receives a request message for establishing the DC application corresponding to the information about the target application for the first user equipment, and when the first network function determines that the communication peer end of the first terminal does not support the DC service or does not support the target application, the first network function sends the first indication information to the second network function, or when the first network function receives a request message for establishing the P2A application DC corresponding to the information about the target application for the first user equipment, and when the first network function determines that the communication peer end of the first terminal does not support the DC service or does not support the target application, the first network function sends the first indication information to the second network function.

FIG. 4 is a schematic flowchart 4 of a data channel establishment method according to an embodiment of this application. As shown in FIG. 4, the method includes Step 401 and Step 403.

Step 401: A second network function obtains first indication information, where the first indication information indicates the second network function to perform a first operation, and the first operation is used for sending related information of data corresponding to a target application to second user equipment.

Step 402: The second network function receives the data that is sent by first user equipment through a P2A application data channel DC and that corresponds to the target application.

Step 403: The second network function performs the first operation based on the first indication information and the data corresponding to the target application.

Specifically, the second network function first obtains the first indication information, to indicate the second network function to perform the first operation, that is, send the related information of the data corresponding to the target application to the second user equipment. After receiving the data that is sent by the first user equipment through the P2A application DC and that corresponds to the target application, the second network function may perform the first operation based on the first indication information and the data corresponding to the target application, to implement interaction between the first user equipment and the second user equipment about the target application.

In the data channel establishment method provided in this embodiment of this application, the second network function first obtains the first indication information, then performs, after receiving the data that is sent by the first user equipment through the P2A application DC and that corresponds to the target application, the first operation based on the first indication information and the data corresponding to the target application, and specifically sends the related information of the data corresponding to the target application to the second user equipment, to implement interaction between the first user equipment and the second user equipment about the target application, so that even when DC characteristics of the first user equipment and the second user equipment do not match each other, interaction with the target application can be implemented through the P2A application DC, and different types of DC applications may also be used between UE that supports the DC service and UE that does not support the DC service, thereby effectively enhancing use experience of the DC service.

Optionally, an implementation of obtaining the first indication information by the second network function may include:
The second network function receives the first indication information sent by a first network function; or
the second network function receives the first indication information sent by the first user equipment.

Specifically, the second network function may receive the first indication information from the first network function or the first user equipment.

It should be noted that in a process of establishing the P2A application DC, the second network function can receive the first indication information sent by the first network function. Only after the P2A application DC is successfully established, the second network function can receive, through the P2A application DC, the first indication information sent by the first user equipment.

It should be noted that obtaining in this invention may be understood as obtaining, learning, or receiving, and obtaining from another network device, or may be local obtaining.

Optionally, the first indication information may include at least one of the following:
(1) second indication information, indicating to perform the first operation;
(2) information about the target application; and
(3) content of the first operation.

Optionally, if the target application is used for file transmission, content of the first operation may include at least one of the following:
a. saving a file;
b. generating a download link corresponding to the file; and
c. sending the download link to the second user equipment.

Optionally, when the target application is used for real-time speech translation, the content of the first operation may include at least one of the following:
a. establishing a video transmission channel between the second network function and the second user equipment;
b. generating corresponding text based on call voice or a call video;
c. generating a video file by using the generated text and the call voice or the call video; and
d. sending the generated video file to the second user equipment.

Optionally, when the target application is used for location sharing, the content of the first operation may include at least one of the following:
a. mapping location information of the first user equipment to a map;
b. generating a link including the map and the location information of the first user equipment; and
c. sending the generated link to the second user equipment.

Optionally, the first message may include at least one of the following:
(1) information about the target application; and
(2) Third indication information, indicating to establish the P2A application DC, where the third indication information is determined by the first user equipment based on that the second user equipment does not support the DC service or does not support the target application.

Optionally, the second network function may include at least one of the following: the MF, the MRF, and a DC AS.

Optionally, an implementation of performing the first operation based on the first indication information and the data corresponding to the target application by the second network function may include:
The second network function determines, based on the first indication information and the data corresponding to the target application, the related information of the data corresponding to the target application; and
the second network function sends the related information of the data corresponding to the target application to the second user equipment.

Optionally, the related information of the data corresponding to the target application includes at least one of the following:
(1) a link generated based on the data corresponding to the target application;
(2) a video file generated based on the data corresponding to the target application; and
(3) a multimedia file generated based on the data corresponding to the target application.

Optionally, when the related information of the data corresponding to the target application includes the link generated based on the data corresponding to the target application, an implementation of sending the related information of the data corresponding to the target application to the second user equipment by the second network function may include:
The second network function sends, by using an SMS message, the link generated based on the data corresponding to the target application to the second user equipment; or
the second network function sends, by using an IMS AS, the link generated based on the data corresponding to the target application to the second user equipment, for example, by using an SMS message or IMS signaling; or
the second network function sends, by using the first user equipment, the link generated based on the data corresponding to the target application to the second user equipment, for example, the second network function sends the link to the first user equipment through the P2A application DC, and the first user equipment sends the link to the second user equipment by using an SMS message or IMS signaling.

Specifically, the second network function may determine, based on the first indication information and the data corresponding to the target application, the related information of the data corresponding to the target application. If the related information of the data corresponding to the target application includes the generated link, the second network function may directly send the generated link to the second user equipment by using the SMS message, or may send the generated link to the second user equipment by using the IMS AS.

Optionally, before the second network function receives the first indication information sent by the first network function, the method further includes:
The second network function sends a subscription request to the first network function, where the subscription request includes event information, and the event information includes at least one of the following:
the information about the target application;
the second user equipment does not support the DC service or the second user equipment does not support the target application; and
establishing the P2A application DC.

It should be noted that the second terminal device may be understood as a communication peer end of the first terminal device, and the first terminal device may be understood as an initiator of the application DC corresponding to the target application. For example, when the first network function receives a request message for establishing the DC application corresponding to the information about the target application for the first user equipment, and when the first network function determines that the communication peer end of the first terminal does not support the DC service or does not support the target application, the first network function sends the first indication information to the second network function, or when the first network function receives a request message for establishing the P2A application DC corresponding to the information about the target application for the first user equipment, and when the first network function determines that the communication peer end of the first terminal does not support the DC service or does not support the target application, the first network function sends the first indication information to the second network function.

FIG. 5 is a signaling interaction diagram 1 of a data channel establishment method according to an embodiment of this application. As shown in FIG. 5, the method includes Step 501 and Step 503.

Step 501: First user equipment determines that an application DC corresponding to a target application cannot be established with second user equipment.

Step 502: The first user equipment sends a first message to a first network function, where the first message is used for requesting to establish a P2A application DC corresponding to the target application.

Step 503: The first network function establishes, based on the first message, a P2A application DC corresponding to the target application.

Specifically, first, the first user equipment determines whether the application DC corresponding to the target application can be established with the second user equipment. If it is determined that the application DC corresponding to the target application cannot be established with the second user equipment, the first user equipment sends the first message to the first network function, to request to establish the P2A application DC corresponding to the target application. Further, the first network function establishes, based on the first message, the P2A application DC corresponding to the target application, to implement communication between the first user equipment and an application server side through the P2A application DC, and further implement interaction, about the target application, between the first user equipment and the second user equipment by using an application server, so that even when DC characteristics of the first user equipment and the second user equipment do not match each other, interaction with the target application can be implemented through the P2A application DC, and different types of DC applications may also be used between UE that supports a DC service and UE that does not support a DC service, thereby effectively enhancing use experience of the DC service.

The following describes the data channel establishment method provided in an embodiment of this application by using an example.

This embodiment of this application mainly resolves a problem of how to use the target application in a call process of UE (UE-1) supporting DC and UE (UE-2) not supporting DC, to improve call experience.

For the foregoing problem, this embodiment of this application proposes that, in a call process between the UE-1 and the UE-2, if the UE-1 needs to use an APP (the target application), but the UE-1 determines that the UE-2 does not support the DC service or does not support the APP, the UE-1 may initiate an establishment request for an application DC of a type P2A by using the APP, so that interaction, about the APP, between the UE-1 and the UE-2 is implemented by using the application DC, thereby improving call experience.

For ease of description, the UE-2 does not support the DC service is used as an example for description below. The method in this embodiment of this application may also be used when the UE-2 does not support an APP selected by the UE-1.

Embodiment 1: A DCSF indicates an MF to perform a first operation.

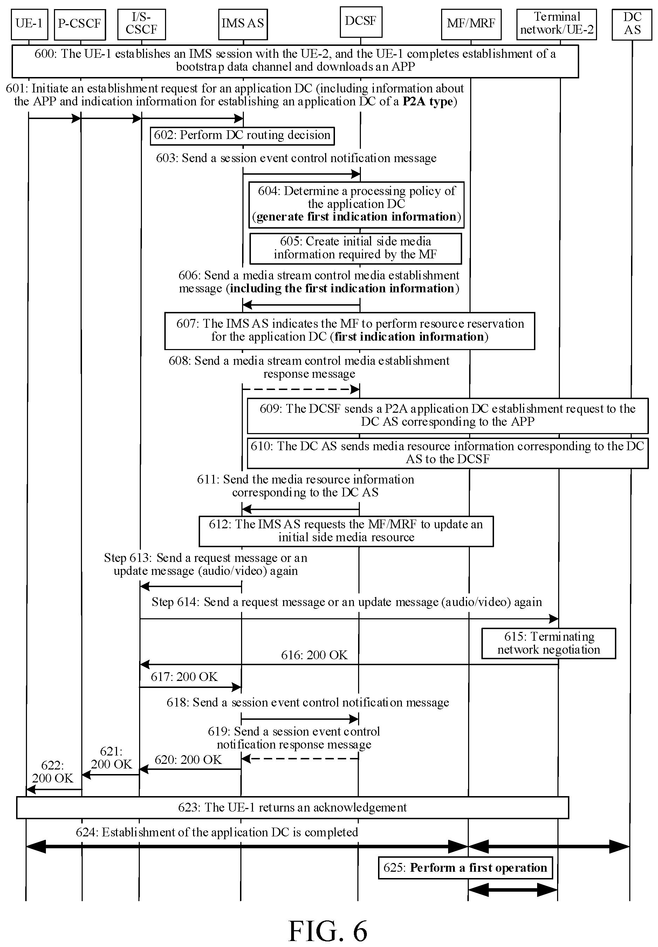

FIG. 6 is a signaling interaction diagram 2 of a data channel establishment method according to an embodiment of this application. As shown in FIG. 6, the method includes the following steps.

Step 600: UE-1 establishes an IMS session with UE-2, and the UE-1 completes establishment of a bootstrap data channel (bootstrap data channel) and downloads an APP.

Specifically, the IMS session may be a session of a call type or a video type, and the APP may be understood as the target application in embodiments of this application.

It should be noted that in a process of establishing the IMS session, the UE-1 may determine that the UE-2 does not support a DC service or does not support the APP.

Step 601: The UE-1 initiates an application DC establishment request to an IMS AS by using the APP.

Specifically, the request may be initiated by using a session initiation protocol (Session Initiation Protocol, SIP) reINVITE message, and the message is sent to the IMS AS by using a proxy-call session control function (Proxy-Call Session Control Function, P-CMSC) and a service-call session control function (Service-Call Session Control Function, S-CMSC).

The request includes information about the APP, for example, an APP ID and indication information for establishing a P2A application DC. The indication information for establishing the P2A application DC is determined by the UE-1 based on that that the UE-2 does not support the DC service or does not support the APP.

Step 602: The IMS AS performs DC routing decision (DC Routing Decision).

Specifically, in a process of performing DC routing decision, the IMS AS may determine, based on subscription data of the UE-1, whether the UE-1 can use the DC service. For example, the DC service selected by the UE-1 needs to be authorized or charged. In this case, the IMS AS needs to determine whether the UE-1 can use the DC service.

When determining, based on the subscription data of the UE-1, that the UE-1 can use the DC service, the IMS AS may determine to notify a DCSF.

Step 603: The IMS AS sends a Nimsas _SessionEventControl _Notify message to the DCSF.

Specifically, the IMS AS notifies, by using the Nimsas_SessionEventControl_Notify message, the DCSF that the UE-1 can use the DC service.

Step 604: The DCSF determine a processing policy (Policy) of the application DC based on the message from notification by the IMS AS (generate first indication information).

Specifically, the DCSF may generate the first indication information based on the information about the APP (for example, the APP ID) in the message and that the UE-2 does not support the DC service. The first indication information indicates the MF to perform the first operation.

Optionally, the first indication information may be included in the processing policy, or exist in parallel with the processing policy.

The first indication information includes at least one of the following:
(1) executing an interworking (interworking) indication, where
   specifically, the interworking indication may be understood as indication information for performing the first operation, namely, the foregoing second indication information;
(2) the information about the APP (for example, the APP ID); and
(3) specific content of the first operation.

It should be noted that, the first operation is an operation performed by the MF based on the first indication information, and the specific content of the first operation may be different according to based on different APPs. The following uses an example for description.

For example, when the APP is a file transmission APP, the first operation may include at least one of the following:
a. saving a file;
b. generating a download link of the file; and
c. sending the download link to the UE-2.

Specifically, the MF may directly send the download link to the UE-2, for example, send the download link by using an SMS message, or the MF may send the download link to the UE-2 by using the IMS AS, for example, the MF first sends the download link to the IMS AS by using the DCSF, and then the IMS AS sends the download link to the UE-2 by using an SMS message.

For another example, if the APP is a real-time speech translation APP, the first operation may include at least one of the following:
a. establishing a video transmission channel (for example, an RTP connection) between the MF and the UE-2;
b. generating corresponding text based on call voice or a call video;
c. combining the text with the call voice or the call video, to generate a video file; and
d. sending the generated video file to the UE-2.

For another example, if the APP is a location sharing APP, the first operation may include at least one of the following:
a. mapping location information (for example, longitude and latitude information) reported by the UE-1 to a map (for example, a web map);
b. generating a location link including the map and the location information of a location of the UE-1; and
c. sending the generated location link to the UE-2.

Specifically, the MF may directly send the location link to the UE-2, for example, send the location link by using an SMS message, or the MF may send the location link to the UE-2 by using the IMS AS.

It should be noted that, the MF may pre-store a first operation corresponding to each APP, so that when the MF receives the interworking indication and the information about the APP that are sent by the DCSF by using the IMS AS, the MF may know how to perform the first operation.

In addition, the DCSF may also directly send, to the MF by using the IMS AS, the specific content of the first operation that needs to be performed by the MF.

Optionally, the MF in the foregoing embodiment may also be replaced with an MRF. For ease of description, the MF is used below for description.

Step 605: The DCSF creates initial side media information required by the MF.

Specifically, the DCSF may determine, based on a P2A indication, to use a DC AS as a target point, and require the MF to join a communication path.

Step 606: The DCSF sends a Nimsas_MediaControl_MediaInstruction message (including the first indication information) to the IMS AS.

Specifically, the Nimsas_MediaControl_MediaInstruction message indicates the IMS AS to connect a media of the UE-1 to the MF.

It should be noted that the Nimsas_MediaControl_MediaInstruction message further includes the first indication information.

Step 607: The IMS AS indicates the MF to perform resource reservation for the application DC.

It should be noted that the message sent by the IMS AS to the MF further includes the first indication information.

Step 608: The IMS AS sends a Nimsas_MediaControl_MediaInstructionResponse message to the DCSF.

Specifically, the Nimsas_MediaControl_MediaInstructionResponse message carries media resource information corresponding to the MF.

Step 609: The DCSF sends a P2A application DC establishment request to the DC AS corresponding to the APP.

Specifically, the P2A application DC establishment request includes the media resource information corresponding to the MF.

Step 610: The DC AS sends the media resource information corresponding to the DC AS to the DCSF.

Specifically, the DC AS receives the P2A application DC establishment request, and returns media resource information corresponding to the DC AS.

Step 611: The DCSF sends the Nimsas_MediaControl_MediaInstruction message to the IMS AS.

Specifically, the DCSF sends the Nimsas_MediaControl_MediaInstruction message to the IMS AS, to request the IMS AS to update the media resource information corresponding to the DC AS to the MF, so as to establish a data transmission channel between the MF and the DC AS.

Step 612: The IMS AS requests the MF/MRF to update an initial side media resource.

Step 613: The IMS AS sends a re-INVITE message or an update message (audio/video) to an I/S-CSCF.

Specifically, the re-INVITE message does not include the information about the application DC.

Step 614: The I/S-CSCF sends the re-INVITE message or the update message (audio/video) to a terminal network/the UE-2.

Step 615: Terminating network negotiation (Terminating network negotiation).

Step 616: The terminal network/UE-2 sends a 200 OK response to the I/S-CSCF.

Step 617: The I/S-CSCF sends a 200 OK response to the IMS AS.

Step 618: The IMS AS sends a Nimsas_SessionEventControl_Notify message to the DCSF, and sends, to the DCSF, an event notification indicating successful media establishment.

Step 619: The DCSF sends a Nimsas_SessionEventControl_Notify Response message to the IMS AS.

Step 620: The IMS AS sends a 200 OK response to the I/S-CSCF.

Step 621: The I/S-CSCF sends a 200 OK response to the P-CSCF.

Step 622: The P-CSCF sends a 200 OK response to the UE-1.

Step 623: The UE-1 returns an acknowledgement (ACK).

Step 624: Complete establishment of the application DC between the UE-1 and the DC AS, where the application DC passes through the MF, and the MF forwards data between the UE-1 and the DC AS.

Step 625: The MF receives data that is sent by the UE-1 through the application DC and that corresponds to the APP, and performs the first operation.

Specifically, the MF may determine how to perform the first operation based on the first indication information.

Embodiment 2: A DCSF indicates a DC AS to perform a first operation.

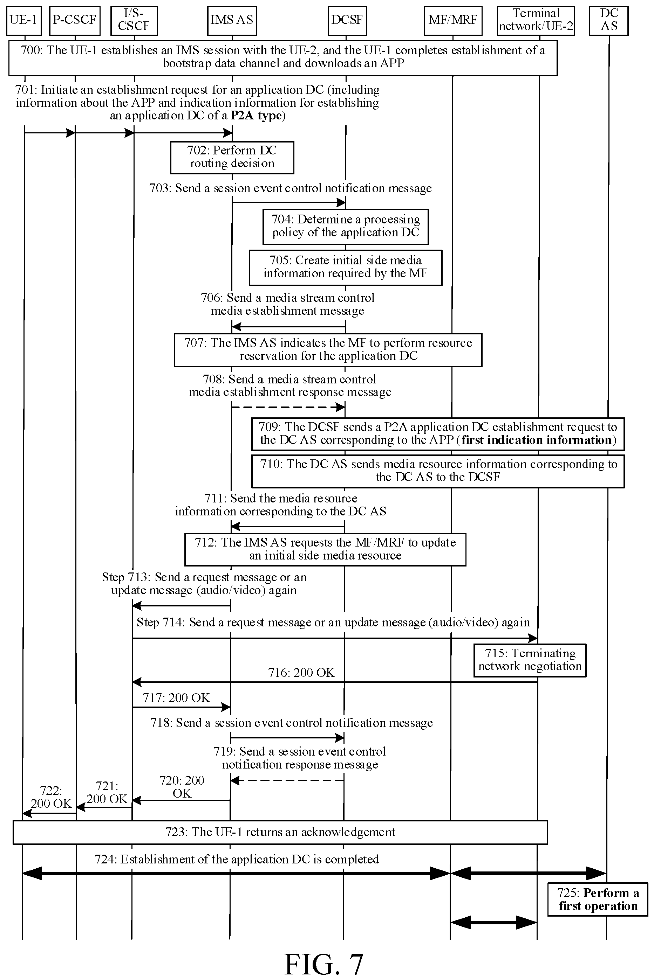

FIG. 7 is a signaling interaction diagram 3 of a data channel establishment method according to an embodiment of this application. As shown in FIG. 7, compared with steps of Embodiment 1, steps of the method have the following differences.

A message sent in Step 706 and Step 707 does not include first indication information.

In Step 709, augmented content related to a case in which the DCSF may generate the first indication information based on information about an APP (for example, an APP ID) in the message and that UE-2 does not support a DC service in Step 604 is added. Content of the first indication information is also basically the same as the content in Embodiment 1. Details are not described herein again.

It should be noted that the foregoing augmented content related to a case in which the DCSF generates the first indication information may be synchronously performed in Step 709, or may be synchronously performed in Step 704.

Step 725 is performed by the DC AS, and details are as follows.

Step 725: The DC AS receives data that is sent by UE-1 through a application DC and that corresponds to an APP, and performs the first operation.

Embodiment 3: UE-1 (first user equipment) indicates a DC AS to perform a first operation.

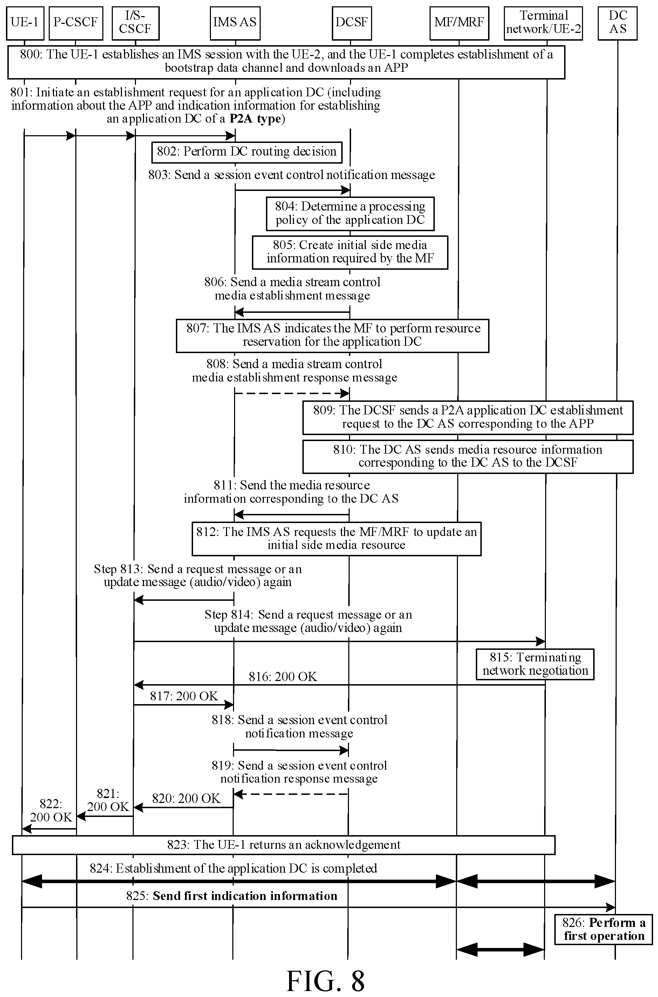

FIG. 8 is a signaling interaction diagram 4 of a data channel establishment method according to an embodiment of this application. As shown in FIG. 8, compared with steps of Embodiment 2, steps of the method have the following differences.

In step 809, the related augmented content in Step 709 is not performed, and is basically the same as the content in step 609.

Step 825: The UE-1 sends first indication information to the DC AS based on information about an APP and that UE-2 does not support a DC. Specific content of the first indication information is basically the same as that in Embodiment 1. Details are not described herein again.

Step 826: The DC AS receives data that is sent by UE-1 through a application DC and that corresponds to the APP, and performs the first operation.

In this embodiment of this application, different types of DC applications may be used between UE that supports a DC service and UE that does not support the DC service, thereby effectively enhancing use experience of the DC service.

An execution body of the data channel establishment method according to an embodiment of the disclosure may be a data channel establishment apparatus. In this embodiment of this application, the data channel establishment apparatus according to an embodiment of this application is described with the data channel establishment apparatus executing the data channel establishment method as an example.

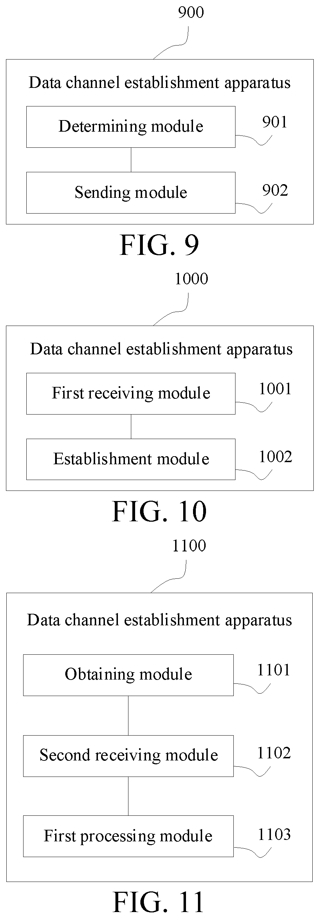

FIG. 9 is a schematic diagram 1 of a structure of a data channel establishment apparatus according to an embodiment of this application. As shown in FIG. 9, a data channel establishment apparatus 900 includes:
a determining module 901, configured to determine that an application data channel DC corresponding to a target application cannot be established with second user equipment; and
a sending module 902, configured to send a first message to a first network function, where the first message is used for requesting to establish a person-to-application P2A application DC corresponding to the target application.

In the data channel establishment apparatus provided in this embodiment of this application, when the determining module determines that first user equipment cannot establish the application DC corresponding to the target application with the second user equipment, the sending module may send the first message to the first network function to request to establish the P2A application DC corresponding to the target application, to implement communication between the first user equipment and an application server side through the P2A application DC, and further implement interaction, about the target application, between the first user equipment and the second user equipment by using an application server, so that even when DC characteristics of the first user equipment and the second user equipment do not match each other, interaction with the target application can be implemented through the P2A application DC, and different types of DC applications may also be used between UE that supports a DC service and UE that does not support the DC service, thereby effectively enhancing use experience of the DC service.

Optionally, the data channel establishment apparatus 900 further includes:
a second processing module, configured to send, through the P2A application DC, data corresponding to the target application to a second network function, where the data corresponding to the target application is used by the second network function to perform a first operation, and the first operation is used for sending related information of the data corresponding to the target application to the second user equipment.

Optionally, the determining module 901 is specifically configured to: when determining that the second user equipment does not support the DC service or does not support the target application, determine that the application DC corresponding to the target application cannot be established with the second user equipment.

Optionally, the first message further indicates the first network function to send first indication information to the second network function, where the first indication information indicates the second network function to perform the first operation.

Optionally, the sending module is configured to send the first indication information to the second network function, where the first indication information indicates the second network function to perform the first operation.

Optionally, the second processing module is further configured to:
determine the first indication information based on information about the target application and that the second user equipment does not support the DC service; or
determine the first indication information based on information about the target application and that the second user equipment does not support the target application.

Optionally, the first indication information may include at least one of the following:
(1) second indication information, indicating to perform the first operation;
(2) information about the target application; and
(3) content of the first operation.

Optionally, if the target application is used for file transmission, content of the first operation includes at least one of the following:
saving a file;
generating a download link corresponding to the file; and
sending the download link to the second user equipment.

Optionally, when the target application is used for real-time speech translation, the content of the first operation includes at least one of the following:
establishing a video transmission channel between the second network function and the second user equipment;
generating corresponding text based on call voice or a call video;
generating a video file by using the generated text and the call voice or the call video; and
sending the generated video file to the second user equipment.

Optionally, when the target application is used for location sharing, the content of the first operation includes at least one of the following:
mapping location information of the first user equipment to a map;
generating a link comprising the map and the location information of the first user equipment; and
sending the generated link to the second user equipment.

Optionally, the first message may include at least one of the following:
(1) information about the target application; and
(2) Third indication information, indicating to establish the P2A application DC, where the third indication information is determined by the first user equipment based on that the second user equipment does not support the DC service or does not support the target application.

Optionally, the second network function may include at least one of the following: the MF, the MRF, and a DC AS.

Optionally, the related information of the data corresponding to the target application includes at least one of the following:
(1) a link generated based on the data corresponding to the target application;
(2) a video file generated based on the data corresponding to the target application; and
(3) a multimedia file generated based on the data corresponding to the target application.

FIG. 10 is a schematic diagram 2 of a structure of a data channel establishment apparatus according to an embodiment of this application. As shown in FIG. 10, a data channel establishment apparatus 1000 includes:
a first receiving module 1001, configured to receive a first message sent by first user equipment, where the first message is used for requesting to establish a person-to-application P2A application data channel DC corresponding to a target application; and
an establishment module 1002, configured to establish, based on the first message, the P2A application DC corresponding to the target application.

In the data channel establishment apparatus provided in this embodiment of this application, the first receiving module first receives the first message sent by the first user equipment, and the message is used to request to establish the P2A application DC corresponding to the target application, so that the establishment module establishes, based on the first message, the P2A application DC corresponding to the target application, and the first user equipment implements communication between the first user equipment and the application server side through the established P2A application DC. In this way, the first user equipment may implement interaction, about the target application, between the first user equipment and the second user equipment by using the application server, so that even when DC characteristics of the first user equipment and the second user equipment do not match each other, interaction with the target application can be implemented through the P2A application DC, and different types of DC applications may also be used between UE that supports the DC service and UE that does not support the DC service, thereby effectively enhancing use experience of the DC service.

Optionally, the data channel establishment apparatus 1000 further includes:
a third processing module, configured to send the first indication information to the second network function, where the first indication information indicates the second network function to perform the first operation.

Optionally, the third processing module is further configured to:
determine the first indication information; and
send the first indication information to the second network function.

Optionally, the third processing module is specifically configured to:
determine the first indication information based on information about the target application and that the second user equipment does not support the DC service; or
determine the first indication information based on information about the target application and that the second user equipment does not support the target application.

Optionally, the first indication information may include at least one of the following:
(1) second indication information, indicating to perform the first operation;
(2) information about the target application; and
(3) content of the first operation.

Optionally, if the target application is used for file transmission, content of the first operation includes at least one of the following:
saving a file;
generating a download link corresponding to the file; and
sending the download link to the second user equipment.

Optionally, when the target application is used for real-time speech translation, the content of the first operation includes at least one of the following:
establishing a video transmission channel between the second network function and the second user equipment;
generating corresponding text based on call voice or a call video;
generating a video file by using the generated text and the call voice or the call video; and
sending the generated video file to the second user equipment.

Optionally, when the target application is used for location sharing, the content of the first operation includes at least one of the following:
mapping location information of the first user equipment to a map;
generating a link comprising the map and the location information of the first user equipment; and
sending the generated link to the second user equipment.

Optionally, the third processing module is further specifically configured to determine a processing policy of the application DC in a process of establishing the application DC, where the processing policy includes the first indication information.

In some embodiments, the third processing module is specifically configured to perform at least one of the followings:
sending a resource reservation indication message of the application DC to a media function MF in the second network function in a process of establishing the application DC, where the resource reservation indication message includes the first indication information; or
sending, in a process of establishing the application DC, an establishment request message of the application DC to a DC application server AS corresponding to the target application; where the establishment request message includes the first indication information.

Optionally, the first message may include at least one of the following:
(1) information about the target application; and
(2) Third indication information, indicating to establish the P2A application DC, where the third indication information is determined by the first user equipment based on that the second user equipment does not support the DC service or does not support the target application.

Optionally, the second network function may include at least one of the following: the MF, the MRF, and a DC AS.

FIG. 11 is a schematic diagram 3 of a structure of a data channel establishment apparatus according to an embodiment of this application. As shown in FIG. 11, a data channel establishment apparatus 1100 includes:
an obtaining module 1101, configured to obtain first indication information, where the first indication information indicates a second network function to perform a first operation, and the first operation is used for sending related information of data corresponding to a target application to second user equipment;
a second receiving module 1102, configured to receive the data that is sent by first user equipment through a person-to-application P2A application data channel DC and that corresponds to the target application; and
a first processing module 1103, configured to perform the first operation based on the first indication information and the data corresponding to the target application.

In the data channel establishment apparatus provided in this embodiment of this application, the obtaining module first obtains the first indication information, and then after the second receiving module receives the data that is sent by the first user equipment through the P2A application DC and that corresponds to the target application, the first processing module performs the first operation based on the first indication information and the data corresponding to the target application, and specifically sends the related information of the data corresponding to the target application to the second user equipment, to implement interaction between the first user equipment and the second user equipment about the target application, so that even when DC characteristics of the first user equipment and the second user equipment do not match each other, interaction with the target application can be implemented through the P2A application DC, and different types of DC applications may also be used between UE that supports the DC service and UE that does not support the DC service, thereby effectively enhancing use experience of the DC service.

Optionally, the obtaining module 1101 is specifically configured to:
receive the first indication information sent by a first network function; or
receive the first indication information sent by the first user equipment.

Optionally, the first indication information may include at least one of the following:
(1) second indication information, indicating to perform the first operation;
(2) information about the target application; and
(3) content of the first operation.

Optionally, if the target application is used for file transmission, content of the first operation includes at least one of the following:
saving a file;
generating a download link corresponding to the file; and
sending the download link to the second user equipment.

Optionally, when the target application is used for real-time speech translation, the content of the first operation includes at least one of the following:
establishing a video transmission channel between the second network function and the second user equipment;
generating corresponding text based on call voice or a call video;
generating a video file by using the generated text and the call voice or the call video; and
sending the generated video file to the second user equipment.

Optionally, when the target application is used for location sharing, the content of the first operation includes at least one of the following:
mapping location information of the first user equipment to a map;
generating a link comprising the map and the location information of the first user equipment; and
sending the generated link to the second user equipment.

Optionally, the first message may include at least one of the following:
(1) information about the target application; and
(2) Third indication information, indicating to establish the P2A application DC, where the third indication information is determined by the first user equipment based on that the second user equipment does not support the DC service or does not support the target application.

Optionally, the second network function may include at least one of the following: the MF, the MRF, and a DC AS.

Optionally, the first processing module 1103 is specifically configured to:
determine, based on the first indication information and the data corresponding to the target application, the related information of the data corresponding to the target application; and
send the related information of the data corresponding to the target application to the second user equipment.

Optionally, the related information of the data corresponding to the target application includes at least one of the following:
(1) a link generated based on the data corresponding to the target application;
(2) a video file generated based on the data corresponding to the target application; and
(3) a multimedia file generated based on the data corresponding to the target application.

Optionally, the first processing module 1103 is further specifically configured to: when the related information of the data corresponding to the target application includes the link generated based on the data corresponding to the target application, perform the following steps:
send, by using an SMS message, the link generated based on the data corresponding to the target application to the second user equipment; or
send, by using an IP multimedia subsystem IMS AS, the link generated based on the data corresponding to the target application to the second user equipment.

The data channel establishment apparatus in this embodiment of this application may be an electronic device, for example, an electronic device with an operating system, or may be a component in an electronic device, for example, an integrated circuit or chip. The electronic device may be a terminal, or may be a device other than a terminal. For example, the terminal may include, but is not limited to, the types of the terminal 11 listed above, and the another device may be a server, a network attached storage (Network Attached Storage, NAS), or the like. This is not specifically limited in embodiments of this application.

The data channel establishment apparatus provided in this embodiment of this application can implement the processes implemented by the method embodiments in FIG. 2 to FIG. 8, and the same technical effects are achieved. To avoid repetition, details are not described herein again.

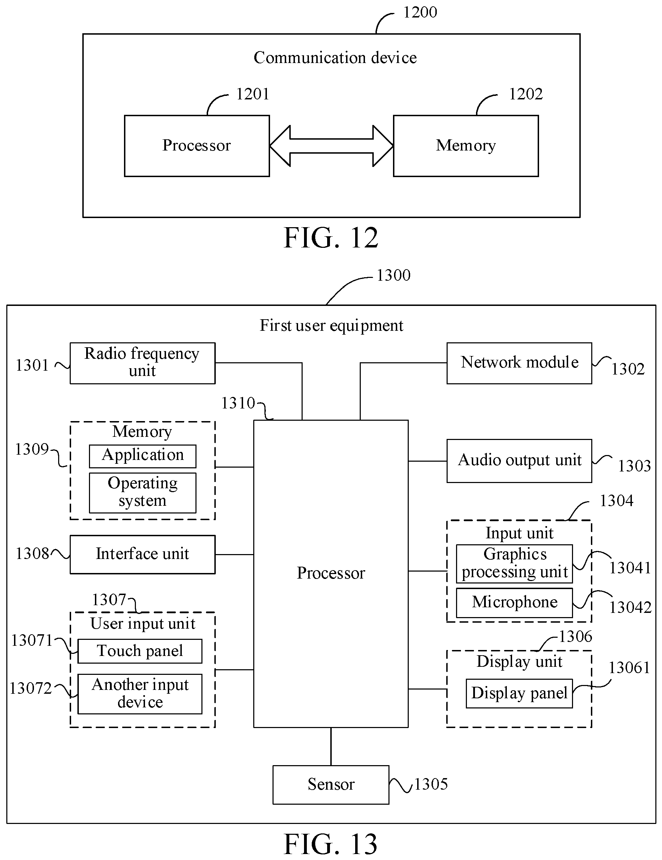

FIG. 12 is a schematic diagram of a structure of a communication device according to an embodiment of this application. As shown in FIG. 12, an embodiment of this application further provides a communication device 1200, including a processor 1201 and a memory 1202. The memory 1202 stores a program or instructions executable on the processor 1201. For example, when the communication device 1200 is first user equipment, and when the program or the instructions are executed by the processor 1201, the steps of embodiments of the data channel establishment method performed by the first user equipment are implemented, and the same technical effect is achieved. When the communication device 1200 is a first network function, and when the program or the instructions are executed by the processor 1201, the steps of the data channel establishment method performed by the first network function are implemented, and the same technical effect is achieved. When the communication device 1200 is a second network function, and when the program or the instructions are executed by the processor 1201, the steps of the data channel establishment method performed by the second network function are implemented, and the same technical effect is achieved. To avoid repetition, details are not described herein again.

An embodiment of this application further provides first user equipment, including a processor and a communication interface. The communication interface is coupled to the processor, and the processor is configured to run a program or instructions, to implement the steps in the method embodiment in FIG. 2. This first user equipment embodiment corresponds to the foregoing first user equipment side method embodiment. Each implementation process and implementation of the foregoing method embodiment can be applied to this first user equipment embodiment, and can achieve the same technical effect. Specifically, FIG. 13 is a schematic diagram of a hardware structure of first user equipment according to an embodiment of this application.

First user equipment 1300 includes, but is not limited to, at least some components such as a radio frequency unit 1301, a network module 1302, an audio output unit 1303, an input unit 1304, a sensor 1305, a display unit 1306, a user input unit 1307, an interface unit 1308, a memory 1309, and a processor 1310.

A person skilled in the art may understand that the first user equipment 1300 may further include a power supply (for example, a battery) for supplying power to the components. The power supply may be logically connected to the processor 1310 through a power management system, thereby implementing functions such as charging, discharging, and power consumption management through the power management system. A terminal structure shown in FIG. 13 does not constitute a limitation to the first user equipment, and the first user equipment may include more or fewer components than those shown in the figure, or some components may be combined, or a different component deployment may be used. Details are not repeated herein.

It should be understood that, in this embodiment of this application, the input unit 1304 may include a graphics processing unit (Graphics Processing Unit, GPU) 13041 and a microphone 13042. The graphics processing unit 13041 performs processing on image data of a static picture or a video that is obtained by an image capturing apparatus (for example, a camera) in a video capturing mode or an image capturing mode. The display unit 1306 may include a display panel 13061. The display panel 13061 may be configured by using a liquid crystal display, an organic light-emitting diode, or the like. The user input unit 1307 includes at least one of a touch panel 13071 and another input device 13072. The touch panel 13071 is also referred to as a touchscreen. The touch panel 13071 may include two parts: a touch detection apparatus and a touch controller. The another input device 13072 may include, but is not limited to, a physical keyboard, a functional key (for example, a volume control key or a switch key), a track ball, a mouse, and a joystick. Details are not described herein.

In this embodiment of this application, the radio frequency unit 1301 receives downlink data from a network side device and then transmits the data to the processor 1310 for processing. In addition, the radio frequency unit 1301 may send uplink data to the network side device. Generally, the radio frequency unit 1301 includes, but is not limited to, an antenna, an amplifier, a transceiver, a coupler, a low noise amplifier, a duplexer, and the like.

The memory 1309 may be configured to store a software program or instructions and various data. The memory 1309 may mainly include a first storage area storing a program or instructions and a second storage area storing data. The first storage area may store an operating system, an application program or instructions required by at least one function (for example, a sound playback function and an image display function), and the like. Moreover, the memory 1309 may include a volatile memory or a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), a static random access memory (static RAM, SRAM), a dynamic random access memory (dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), or a direct rambus random access memory (Direct Rambus RAM, DR RAM). The memory 1309 in this embodiment of this application includes but is not limited to these memories and any other memory of a suitable type.

The processor 1310 may include one or more processing units. Optionally, the processor 1310 integrates an application processor and a modem processor. The application processor mainly processes operations involving an operating system, a user interface, an application, and the like. The modem processor mainly processes a wireless communication signal, and is, for example, a baseband processor. It may be understood that the foregoing modem processor may not be integrated into the processor 1310.

It may be understood that, for the implementation processes of the implementations in this embodiment, refer to the descriptions of the data channel establishment method in the first user equipment side method embodiment. The same or corresponding technical effect is achieved. To avoid repetition, details are not described herein again.

An embodiment of this application further provides a network function, including a processor and a communication interface. The communication interface is coupled to the processor, and the processor is used for running a program or instructions, to implement the steps in the method embodiment in FIG. 3 or FIG. 4. This network function embodiment corresponds to the foregoing first network function side method embodiment or second network function method embodiment. Each implementation process and implementation of the foregoing method embodiment can be applied to this first network function or second network function embodiment, and can achieve the same technical effect.

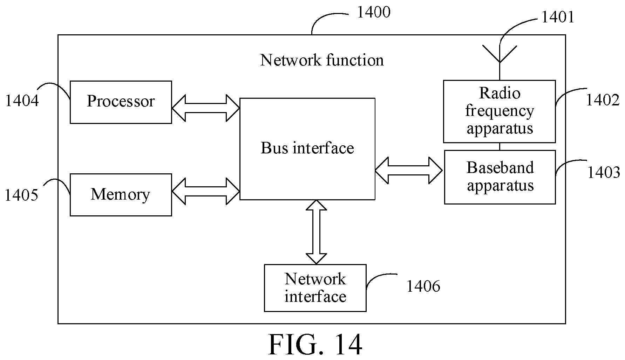

Specifically, an embodiment of this application further provides a network function. FIG. 14 is a schematic diagram of a structure of a network function according to an embodiment of this application. As shown in FIG. 14, a network function 1400 includes an antenna 1401, a radio frequency apparatus 1402, a baseband apparatus 1403, a processor 1404, and a memory 1405. The antenna 1401 is connected to the radio frequency apparatus 1402. In an uplink direction, the radio frequency apparatus 1402 receives information through the antenna 1401, and sends the received information to the baseband apparatus 1403 for processing. In a downlink direction, the baseband apparatus 1403 processes to-be-sent information, and sends the processed to-be-sent information to the radio frequency apparatus 1402. The radio frequency apparatus 1402 processes the received information, and then sends the processed information through the antenna 1401.

The method performed by the network function in the foregoing embodiment may be implemented by the baseband apparatus 1403. The baseband apparatus 1403 includes a baseband processor.

The baseband apparatus 1403 may include, for example, at least one baseband board. A plurality of chips are disposed on the baseband board. As shown in FIG. 14, one chip is, for example, the baseband processor, and is connected to the memory 1405 through a bus interface, to invoke a program in the memory 1405, to perform the network device operations shown in the foregoing method embodiments.

The network function may further include a network interface 1406, where the interface is, for example, a common public radio interface (Common Public Radio Interface, CPRI).

Specifically, the network function 1400 in this embodiment of this invention further includes: instructions or a program stored in the memory 1405 and executable on the processor 1404. The processor 1404 invokes the instructions or program in the memory 1405 to perform the method performed by each module shown in FIG. 10 or FIG. 11, and achieves the same technical effect. To avoid repetition, details are not described herein again.

An embodiment of this application further provides a readable storage medium. The readable storage medium stores a program or instructions. When the program or instructions are executed by a processor, the processes in the data channel establishment method embodiment are implemented, and the same technical effect is achieved. To avoid repetition, details are not described herein again.

The processor is a processor in the terminal described in the foregoing embodiments. The readable storage medium includes a computer-readable storage medium, for example, a computer read-only memory ROM, a random access memory RAM, a magnetic disk, or an optical disk. In some examples, the readable storage medium may be a non-transitory readable storage medium.

An embodiment of this application further provides a chip is further. The chip includes a processor and a communication interface. The communication interface is coupled to the processor, and the processor is configured to run a program or instructions, to implement the processes in the data channel establishment method, and achieve the same technical effect. To avoid repetition, details are not described herein again.

It should be understood that the chip mentioned in this embodiment of this application may also be referred to as a system level chip, a system chip, a chip system, a system on chip, or the like.

An embodiment of this application further provides a computer program/program product. The computer program/program product is stored in a storage medium, and the computer program/program product is executed by at least one processor, to implement the processes in the data channel establishment method embodiment, and achieve the same technical effect. To avoid repetition, details are not described herein again.

An embodiment of this application further provides a data channel establishment system, including: first user equipment, a first network function, and a second network function. The first user equipment may be configured to perform steps of the data channel establishment method on the first user equipment side as described above. The first network function may be configured to perform steps of the data channel establishment method on the first network function side as described above. The second network function may be configured to perform steps of the data channel establishment method on the second network function side as described above.

It should be noted that in this specification, the term "include", "contain", or any other variants thereof are intended to encompass in a non-exclusive mode, so that a process, a method, an object, or an apparatus including a series of elements not only includes those elements, but also includes other elements that are not explicitly listed, or elements that are inherent to such a process, a method, an object, or an apparatus. Without more limitations, an element defined by a sentence "including one..." does not exclude existence of other same elements in the process, the method, the object, or the apparatus that includes the element. In addition, it should be noted that a scope of the method and the apparatus in embodiments of this application is not limited to performing functions according to a sequence that is shown or discussed, but may further include performing functions in a substantially simultaneous manner or in a reversed sequence according to the functions involved. For example, the described method may be performed in a different order than a described order, and various steps may be added, omitted, or combined. In addition, features described with reference to some examples may be combined in other examples.

Through the descriptions of the foregoing embodiments, a person skilled in the art may clearly understand that the methods according to the foregoing embodiments may be implemented by software and a necessary general hardware platform, and certainly, may alternatively be implemented by hardware, but in many cases, the former manner is a better implementation. The computer software product is stored in a storage medium (for example, a ROM/RAM, a magnetic disk, or an optical disc) and includes several instructions for instructing a terminal or a network side device to perform the methods described in embodiments of this application.

The embodiments of this application are described above with reference to the accompanying drawings. However, this application is not limited to the specific implementations described above, and the specific implementations described above are only exemplary and not limitative. A person of ordinary skill in the art may make various forms of implementations under the revelation of this application without departing from the spirit of this application and the protection scope of the claims, and such implementations shall all fall within the protection scope of this application.

## Claims

1. A data channel establishment method, comprising:
determining, by first user equipment, that an application data channel DC corresponding to a target application cannot be established with second user equipment; and
sending, by the first user equipment, a first message to a first network function, wherein the first message is used for requesting to establish a person-to-application P2A application DC corresponding to the target application.

2. The data channel establishment method according to claim 1, wherein the method further comprises:
sending, by the first user equipment through the P2A application DC, data corresponding to the target application to a second network function, wherein the data corresponding to the target application is used by the second network function to perform a first operation, and the first operation is used for sending related information of the data corresponding to the target application to the second user equipment.

3. The data channel establishment method according to claim 1 or 2, wherein the determining, by first user equipment, that an application data channel DC corresponding to a target application cannot be established with a second user equipment comprises:
when determining that the second user equipment does not support a DC service or does not support the target application, determining, by the first user equipment, that the application DC corresponding to the target application cannot be established with the second user equipment.

4. The data channel establishment method according to claim 2, wherein the first message is further used for indicating the first network function to send first indication information to the second network function, wherein the first indication information is used for indicating the second network function to perform the first operation.

5. The data channel establishment method according to claim 2, wherein the method further comprises:
sending, by the first user equipment, first indication information to the second network function, wherein the first indication information is used for indicating the second network function to perform the first operation.

6. The data channel establishment method according to claim 5, wherein the method further comprises:
determining, by the first user equipment, the first indication information based on information about the target application and that the second user equipment does not support the DC service; or
determining, by the first user equipment, the first indication information based on information about the target application and that the second user equipment does not support the target application.

7. The data channel establishment method according to any one of claims 4 to 6, wherein the first indication information comprises at least one of the following:
second indication information, indicating to perform the first operation;
the information about the target application; and
content of the first operation.

8. The data channel establishment method according to claim 7, wherein when the target application is used for file transmission, the content of the first operation comprises at least one of the following:
saving a file;
generating a download link corresponding to the file; and
sending the download link to the second user equipment.

9. The data channel establishment method according to claim 7 or 8, wherein when the target application is used for real-time speech translation, the content of the first operation comprises at least one of the following:
establishing a video transmission channel between the second network function and the second user equipment;
generating corresponding text based on a call voice or a call video;
generating a video file by using the generated text together with the call voice or the call video; and
sending the generated video file to the second user equipment.

10. The data channel establishment method according to any one of claims 7 to 9, wherein when the target application is used for location sharing, the content of the first operation comprises at least one of the following:
mapping location information of the first user equipment to a map;
generating a link comprising the map and the location information of the first user equipment; and
sending the generated link to the second user equipment.

11. The data channel establishment method according to any one of claims 1 to 10, wherein the first message comprises at least one of the following:
the information about the target application; and
third indication information, indicating to establish the P2A application DC, wherein the third indication information is determined by the first user equipment based on that the second user equipment does not support the DC service or does not support the target application.

12. The data channel establishment method according to claim 2, 4, 6, or 9, wherein the second network function comprises at least one of the following: a media function MF, a media resource function MRF, and a DC application server AS.

13. The data channel establishment method according to claim 2, wherein the related information of the data corresponding to the target application comprises at least one of the following:
a link generated based on the data corresponding to the target application;
a video file generated based on the data corresponding to the target application; and
a multimedia file generated based on the data corresponding to the target application.

14. A data channel establishment method, comprising:
receiving, by a first network function, a first message sent by first user equipment, wherein the first message is used for requesting to establish an application data channel DC corresponding to a target application; and
establishing, by the first network function based on the first message, a P2A application DC corresponding to the target application.

15. The data channel establishment method according to claim 14, further comprising:
sending, by the first network function, first indication information to a second network function, wherein the first indication information indicates the second network function to perform a first operation.

16. The data channel establishment method according to claim 15, wherein the method further comprises:
determining, by the first network function, the first indication information; and
sending, by the first network function, the first indication information to the second network function.

17. The data channel establishment method according to claim 16, wherein the determining, by the first network function, the first indication information comprises:
determining, by the first network function, the first indication information based on information about the target application and that second user equipment does not support a DC service; or
determining, by the first network function, the first indication information based on information about the target application and that second user equipment does not support the target application.

18. The data channel establishment method according to any one of claims 15 to 17, wherein the first indication information comprises at least one of the following:
second indication information, indicating to perform the first operation;
the information about the target application; and
content of the first operation.

19. The data channel establishment method according to claim 18, wherein when the target application is used for file transmission, the content of the first operation comprises at least one of the following:
saving a file;
generating a download link corresponding to the file; and
sending the download link to the second user equipment.

20. The data channel establishment method according to claim 18 or 19, wherein when the target application is used for real-time speech translation, the content of the first operation comprises at least one of the following:
establishing a video transmission channel between the second network function and the second user equipment;
generating corresponding text based on a call voice or a call video;
generating a video file by using the generated text together with the call voice or the call video; and
sending the generated video file to the second user equipment.

21. The data channel establishment method according to any one of claims 18 to 20, wherein when the target application is used for location sharing, the content of the first operation comprises at least one of the following:
mapping location information of the first user equipment to a map;
generating a link comprising the map and the location information of the first user equipment; and
sending the generated link to the second user equipment.

22. The data channel establishment method according to claim 16, wherein the determining, by the first network function, the first indication information comprises:
determining a processing policy comprising the first indication information.

23. The data channel establishment method according to claim 16, wherein the sending, by the first network function, the first indication information to the second network function comprises at least one of the following:
sending, by the first network function, a resource reservation indication message of the application DC to a media function MF in the second network function in a process of establishing the application DC, wherein the resource reservation indication message comprises the first indication information; or
sending, by the first network function in a process of establishing the application DC, an establishment request message of the application DC to a DC application server AS corresponding to the target application; wherein the establishment request message comprises the first indication information.

24. The data channel establishment method according to any one of claims 14 to 23, wherein the first message comprises at least one of the following:
the information about the target application; and
third indication information, indicating to establish the P2A application DC, wherein the third indication information is determined by the first user equipment based on that the second user equipment does not support the DC service or does not support the target application.

25. The data channel establishment method according to any one of claims 14 to 23, wherein the first message comprises the information about the target application and fourth indication information; and
when determining that the second user equipment does not support the DC service or does not support the target application, the first network function modifies the fourth indication information into third indication information, and establishes the P2A application DC corresponding to the target application, wherein
the third indication information indicates to establish the P2A application DC, and the fourth indication information indicates to establish a person-to-person P2P application DC.

26. The data channel establishment method according to claim 25, further comprising:
sending, by the first network device, a response message corresponding to the first message to the first user equipment, wherein the response message comprises the third indication information.

27. The data channel establishment method according to claim 15, 16, 20, or 23, wherein the second network function comprises at least one of the following: the media function MF, a media resource function MRF, and the DC AS.

28. A data channel establishment method, comprising:
receiving, by a first network function, a target message comprising information about a target application, wherein the target message is used for requesting to establish an application data channel DC corresponding to the target application to a first user equipment; and
sending, by the first network function, first indication information to a second network function based on the information about the target application and that second user equipment does not support a DC service, or sending, by the first network function, first indication information to a second network function based on the information about the target application and that second user equipment does not support the target application, wherein
the first indication information indicates the second network function to perform a first operation.

29. The data channel establishment method according to claim 28, wherein the method further comprises:
the target message comprises third indication information, and the third indication information indicates to establish a P2A application DC; and
sending, by the first network function, the first indication information to the second network function based on the information about the target application, that the second user equipment does not support the DC service, and the third indication information, or sending, by the first network function, the first indication information to the second network function based on the information about the target application, that the second user equipment does not support the target application, and the third indication information.

30. The data channel establishment method according to claim 28 or 29, wherein the method further comprises:
receiving, by the first network function, a subscription request sent by the second network function, wherein the subscription request comprises event information, and the event information comprises at least one of the following:
the information about the target application; and
the second user equipment does not support the DC service or the second user equipment does not support the target application; and
establishing the P2A application DC.

31. A data channel establishment method, comprising:
obtaining, by a second network function, first indication information, wherein the first indication information indicates the second network function to perform a first operation, and the first operation is used for sending related information of data corresponding to a target application to second user equipment;
receiving, by the second network function, the data that is sent by first user equipment through a person-to-application P2A application data channel DC and that corresponds to the target application; and
performing, by the second network function, the first operation based on the first indication information and the data corresponding to the target application.

32. The data channel establishment method according to claim 31, wherein the obtaining, by a second network function, first indication information comprises:
receiving, by the second network function, the first indication information sent by a first network function; or
receiving, by the second network function, the first indication information sent by the first user equipment.

33. The data channel establishment method according to claim 31 or 32, wherein the first indication information comprises at least one of the following:
second indication information, indicating to perform the first operation;
the information about the target application; and
content of the first operation.

34. The data channel establishment method according to claim 33, wherein when the target application is used for file transmission, the content of the first operation comprises at least one of the following:
saving a file;
generating a download link corresponding to the file; and
sending the download link to the second user equipment.

35. The data channel establishment method according to claim 33 or 34, wherein when the target application is used for real-time speech translation, the content of the first operation comprises at least one of the following:
establishing a video transmission channel between the second network function and the second user equipment;
generating corresponding text based on call voice or a call video;
generating a video file by using the generated text together with the call voice or the call video; and
sending the generated video file to the second user equipment.

36. The data channel establishment method according to any one of claims 33 to 35, wherein when the target application is used for location sharing, the content of the first operation comprises at least one of the following:
mapping location information of the first user equipment to a map;
generating a link comprising the map and the location information of the first user equipment; and
sending the generated link to the second user equipment.

37. The data channel establishment method according to any one of claims 30 to 36, wherein the first indication information comprises at least one of the following:
the information about the target application; and
third indication information, indicating to establish the P2A application DC, wherein the third indication information is determined by the first user equipment based on that the second user equipment does not support a DC service or does not support the target application.

38. The data channel establishment method according to any one of claims 31 to 37, wherein the second network function comprises at least one of the following: a media function MF, a media resource function MRF, and a DC application server AS.

39. The data channel establishment method according to claim 31, wherein the performing, by the second network function, the first operation based on the first indication information and the data corresponding to the target application comprises:
determining, by the second network function based on the first indication information and the data corresponding to the target application, the related information of the data corresponding to the target application; and
sending, by the second network function, the related information of the data corresponding to the target application to the second user equipment.

40. The data channel establishment method according to claim 39, wherein the related information of the data corresponding to the target application comprises at least one of the following:
a link generated based on the data corresponding to the target application;
a video file generated based on the data corresponding to the target application; and
a multimedia file generated based on the data corresponding to the target application.

41. The data channel establishment method according to claim 40, wherein when the related information of the data corresponding to the target application comprises the link generated based on the data corresponding to the target application, the sending, by the second network function, the related information of the data corresponding to the target application to the second user equipment comprises:
sending, by the second network function by using an SMS message, the link generated based on the data corresponding to the target application to the second user equipment; or
sending, by the second network function by using an IP multimedia subsystem IMS AS, the link generated based on the data corresponding to the target application to the second user equipment.

42. The method according to any one of claims 31 to 41, further comprising:
sending, by the second network function, a subscription request to the first network function, wherein the subscription request comprises event information, and the event information comprises at least one of the following:
the information about the target application; and
the second user equipment does not support the DC service or the second user equipment does not support the target application; and
establishing the P2A application DC.

43. A data channel establishment apparatus, comprising:
a determining module, configured to determine that an application data channel DC corresponding to a target application cannot be established with second user equipment; and
a sending module, configured to send a first message to a first network function, wherein the first message is used for requesting to establish a person-to-application P2A application DC corresponding to the target application.

44. A data channel establishment apparatus, comprising:
a first receiving module, configured to receive a first message sent by first user equipment, wherein the first message is used for requesting to establish an application data channel DC corresponding to a target application; and
an establishment module, configured to establish, based on the first message, the P2A application DC corresponding to the target application.

45. A data channel establishment apparatus, comprising:
an obtaining module, configured to obtain first indication information, wherein the first indication information indicates a second network function to perform a first operation, and the first operation is used for sending related information of data corresponding to a target application to second user equipment;
a second receiving module, configured to receive the data that is sent by first user equipment through a person-to-application P2A application data channel DC and that corresponds to the target application; and
a first processing module, configured to perform the first operation based on the first indication information and the data corresponding to the target application.

46. First user equipment, comprising a processor and a memory, wherein the memory stores a program or instructions that are runnable on the processor, and when the program or the instructions are executed by the processor, the steps of the data channel establishment method according to any one of claims 1 to 13 are implemented.

47. A network function, comprising a processor and a memory, wherein the memory stores a program or instructions that are runnable on the processor, and when the program or the instructions are executed by the processor, the steps of the data channel establishment method according to any one of claims 14 to 27 are implemented, the steps of the data channel establishment method according to any one of claims 28 to 30 are implemented, or the steps of the data channel establishment method according to claim 31 or 42 are implemented.

48. A readable storage medium, wherein the readable storage medium stores a program or instructions, wherein when the program or the instructions are executed by the processor, the steps of the data channel establishment method according to any one of claims 1 to 13 are implemented, the steps of the data channel establishment method according to any one of claims 14 to 27 are implemented, the steps of the data channel establishment method according to any one of claims 28 to 30 are implemented, or the steps of the data channel establishment method according to claim 31 or 42 are implemented.
